# EUROPEAN PATENT SPECIFICATION

(11) **EP 1 391 774 B1**
(45) Date of publication and mention of the grant of the patent: **07.12.2005**
(21) Application number: 00957058.1
(22) Date of filing: 08.09.2000
(51) Int. Cl.: G02F 1/13

(54) **LIQUID CRYSTAL DISPLAY**
FLÜSSIGKRISTALLANZEIGE
AFFICHAGE A CRISTAUX LIQUIDES

(43) Date of publication of application: 25.02.2004
(73) Proprietor: CITIZEN WATCH CO. LTD., Tokyo 188-8511 (JP)
(72) Inventor: WATANABE, Makoto, c/o Citizen Watch Co., Ltd., Tokorozawa-shi, Saitama 359-8511 (JP); YAMADA, Osamu, c/o Citizen Watch Co., Ltd., Tokorozawa-shi, Saitama 359-8511 (JP)
(74) Representative: Prüfer, Lutz H.
(86) International application number: PCT/JP2000/006156
(87) International publication number: WO 2002/021199

(56) References cited:
- EP-A- 0 645 663
- EP-A- 0 945 752
- JP-A- 5 100 242
- JP-A- 9 120 078
- JP-A- 9 251 167
- US-A- 5 712 493

## Description

### TECHNICAL FIELD

The invention relates to a liquid crystal display device, particularly to a liquid crystal display device of a structure wherein a semiconductor integrated circuit for driving a display (hereinafter referred to as "drive IC") which is directly mounted on a substrate.

### BACKGROUND TECHNOLOGY

The liquid crystal display device has been widely used for a display device of a liquid crystal TV, a video camera, a personal computer, a word processor, an electronic desk calculator and other various information processing units.

Particularly, in a method of directly mounting a drive IC for driving a display on a substrate such as glass and the like, a so-called COG (chip on glass) mounting method, a mounting part is very compact and a mounting cost is low, resulting in the development of a practical utilization.

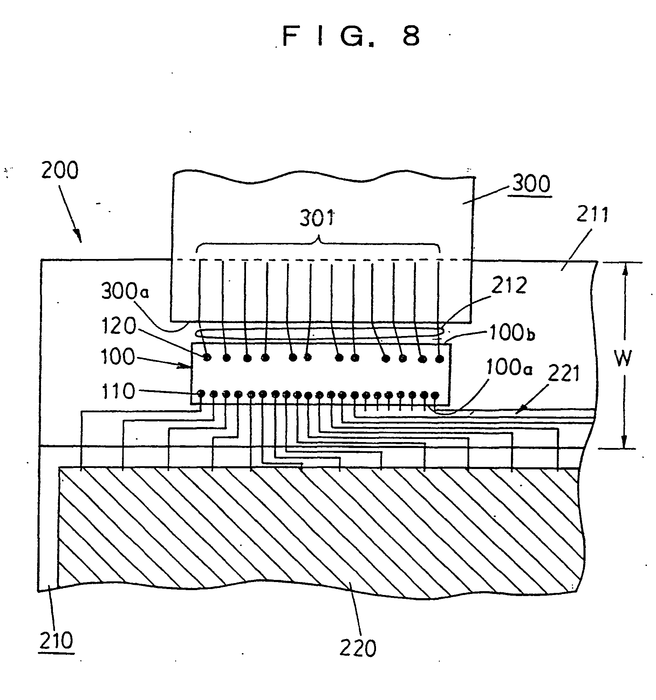

Fig. 8 shows a schematic plan view of a main portion of a liquid crystal display device according to a COG mounting method using a conventional drive IC.

As shown in Fig. 8, a conventional drive IC 100 is generally rectangular in a plane shape, and have multiple output terminals 110 arranged along one long side of a lower surface thereof and a plurality of input terminals 120 arranged along the other long side thereof.

Respective input terminals 120 and output terminals 110 of the drive IC 100 are respectively actually provided on a lower surface of the drive IC 100, but they are represented by solid lines for the convenience of illustration thereof.

A conventional liquid crystal display device 200 on which the drive IC 100 is mounted comprises a pair of substrate 210 including at least one transparent substrate, a liquid crystal layer sandwiched between the pair of substrates 210, a display portion 220 comprising electrodes formed of multiple transparent conductive films for selectively applying voltages to every pixel region of the liquid crystal layer, wherein the drive IC 100 is directly mounted on a frame portion 211 extending to an outside from the display portion 220 of the substrate 210, and the long side of the drive IC 100 is brought close to one side of the display portion 220 along which the output terminals 110 are arranged.

The output terminals 110 of the drive IC 100 are connected to respective connecting parts 221 extending from the multiple electrodes inside the display portion 220 to the frame portion 211 of the substrate 210 via an anisotropic conductive adhesive, respectively.

Respective input terminals 120 of the drive IC 100 are connected to connection wirings 212 formed of transparent conductive films on the frame portion 211 in a pattern via an anisotropic conductive adhesive, and one end 300a of a flexible printed circuit board (hereinafter referred to as "FPC") 300 is brought close to a long side 100b of the drive IC 100 and the printed wirings 301 formed on the FPC 300 are connected to respective connection wirings 212 via the anisotropic conductive adhesive. As a result, external signals are inputted to respective input terminals 120 of the drive IC 100 through the FPC 300.

However, the liquid crystal display device 200 having such a configuration requires the frame portion 211 of the substrate 210 to have a width (corresponding to the length of the short side of the drive IC 100) for mounting the drive IC 100, a width for connecting respective output terminals 110 to respective electrodes of the display portion 220 and a width (this is the largest) for connecting respective input terminals 120 to respective printed wirings 301 of the FPC 300. The substrate 210 is generally made of glass, and it has low adhesive strength to the anisotropic conductive adhesive, and hence when the adhesive strength of the FPC 300 is intended to sufficiently ensured, an area of the adhesive portion of the substrate 210 has to be increased. Accordingly, there was a problem that a width W of the frame portion 211 was rendered large.

If the width W of the frame portion 211 becomes large, an entire size of the liquid crystal display device relative to an effective area of the display portion 220 becomes large. Further, the size of the substrate 210 made of glass becomes large, rendering the strength of the substrate 210 weak, and hence the substrate 210 needs to be thick, causing a drawback that it costs high.

Further, when the multiple output terminals 110 of the drive IC 100 are all arranged along one long side thereof, it causes a problem that mutual insulation between the output terminals 110 cannot be maintained or the output terminals 110 cannot be actually arranged. Accordingly, for example, there is a liquid crystal display device as shown in U.S. Patent No. 5,576,868, wherein a plurality of input terminals are arranged along one short side of a back face of a drive IC and multiple output terminals are arranged in a matrix along in a direction of a short side and a long side on the entire surface except the one short side of the back face, and the drive IC is mounted on the frame portion of the substrate of the liquid crystal display device.

In such an arrangement, external wirings of an FPC and the like can be connected to the short side of the drive IC, which dispenses with a space wherein the FPC is connected to an outside of a long side opposite to a long side close to the display portion of the drive IC, thereby narrowing the width of the frame portion.

However, since the multiple output terminals of the drive IC are disposed breadthwise and lengthwise and arranged in a matrix, if the number of the output terminals is increased, causing a problem that it was very difficult to form wiring patterns for connecting between respective output terminals and respective electrodes of the display portion on the substrate while keeping a sufficient insulation therebetween.

Further, there is another problem that the number of input terminals is insufficient by merely arranging the input terminals of the drive IC along the one short side of the drive IC, and respective input terminals could not be directly connected to a circuit board of an electronic equipment via a conductive rubber connector and the like without using the FPC. EP0945752 discloses a liquid crystal display device which comprises all the features of the preamble of claim 1.

The invention has been developed to solve the foregoing problems of the liquid crystal display device on which a drive IC is mounted according to a COG method, and it is an object of the present invention to provide a liquid crystal display device capable of narrowing the width of a frame portion of a substrate, and providing multiple wiring patterns on the substrate with ease for connecting the multiple output terminals of the drive IC to respective electrodes of a display portion while surely keeping the mutual insulation between the wiring patterns. It is another object of the invention to ensure a sufficient number of input terminals of the drive IC and yet to enable to directly contact respective input terminals to a circuit board of an electronic equipment by a conductive rubber connector.

### DISCLOSURE OF THE INVENITON

To achieve the above objects, the liquid crystal display device according to the invention comprises a pair of substrates including at least one transparent substrate, a liquid crystal layer sandwiched between the pair of substrates, a display portion comprising multiple electrodes for selectively applying voltages to every pixel region of the liquid crystal layer, a drive IC directly mounted on a portion extending from the display portion of the substrate to an outside, the drive IC being rectangular in a plane shape and provided with multiple output terminals for outputting signals to the display portion and a plurality of input terminals for inputting signals from the outside, wherein the plurality of input terminals of the drive IC are arranged in a row along a short side of the drive IC, and the multiple output terminals are arranged in a row along a long side of the drive IC, and an auxiliary substrate mounted on a portion extending from the display portion of the substrate to an outside and being rectangular in a plane shape, the auxiliary substrate having a short side substantially the same length as that of the drive IC, the short side of the auxiliary substrate being brought close to the short side of the drive IC on which the plurality of input terminals are arranged.

A plurality of IC connection terminals respectively connected to the plurality of input terminals of the drive IC are arranged in a row along the short side of the auxiliary substrate at one face thereof, and external connection terminals having the same number as the IC connection terminals are arranged in a row along the long side of the auxiliary substrate at the other face thereof, through holes having the same number as IC connection terminals are provided by penetrating between the one face and the other face of the auxiliary substrate substantially along a diagonal direction, metal wirings for separately connecting the through holes and the IC connection terminals are provided on the one face of the auxiliary substrate, and metal wirings for separately connecting the through holes and the external connection terminals are provided on the other face of the auxiliary substrate.

With the liquid crystal display device, the plurality of input terminals of the drive IC may be arranged along both of a pair of short sides of the drive IC by plural number, and the pair of auxiliary substrates may be mounted on a portion extending from the display portion of the substrate to the outside while short sides of both auxiliary substrates are brought close to the short sides of the drive IC.

The auxiliary substrate may comprise: a glass epoxy board; the respective IC connection terminals, the external connection terminals, the through holes and the metal wirings formed on the glass epoxy board and made of copper plated with gold on the surface thereof; and a protection film made of polyimide and formed on an entire surface of the auxiliary substrate except on the respective IC connection terminals and the external connection terminals.

### BRIEF DESCRIPTION OF THE DRAWINGS

Fig. 1 is a schematic plan view showing a main portion of a liquid crystal display device;
Fig. 2 is a schematic plan view showing a main portion of a liquid crystal display device;
Fig. 3 is a plan view of an auxiliary substrate used in a liquid crystal display device according to an embodiment of the invention, in a state prior to being covered with a protection film;
Fig. 4 is a sectional view taken along the line 4-4 in Fig. 3 and showing a state where the auxiliary substrate is completed;
Fig. 5 is a plan view showing a state where a drive IC and the auxiliary substrate is connected to each other;
Fig. 6 is a schematic plan view showing a main portion of the liquid crystal display device on which the drive IC and the auxiliary substrate are mounted;
Fig. 7 is a schematic side view showing an example of connection between the liquid crystal display device and a circuit board of electronic equipment; and
Fig. 8 is a schematic plan view showing a main portion of a conventional liquid crystal display device.

### BEST MODE FOR CARRYING OUT THE INVENTION

An embodiment of the invention is now described with reference to the attached drawings so as to describe the invention more in detail.

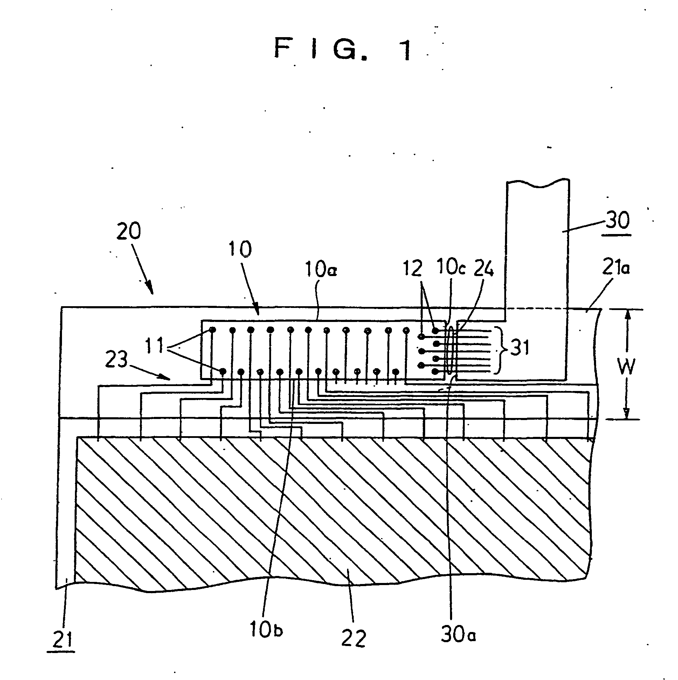

First of all, a first example of a liquid crystal display device is described with reference to Fig. 1. Fig. 1 is a schematic plan view showing a main portion of the liquid crystal display device like Fig. 8.

A liquid crystal display device 20 comprises a pair of substrates 21 including at least one transparent substrate, a liquid crystal layer sandwiched between the pair of substrates 21, a display portion 22 comprising multiple electrodes for selectively applying voltages to every pixel region of the liquid crystal layer, and a drive IC 10 mounted on a frame portion 21a extending from the display portion 22 of the substrate 21 to an outside.

The drive IC 10 is rectangular in a plane shape and has multiple output terminals 11 for outputting signals to the display portion 22 and a plurality of input terminals 12 for inputting signals from the outside, wherein the output terminals 11 and input terminals 12 are provided on the lower surface of the drive IC 10 but they are represented by solid lines for the convenience of illustration.

Respective input terminals 12 are arranged in two rows along one short side 10c of the drive IC 10 while the positions of the input terminals 12 arranged in one row and those in the other row are staggered with each other in the direction of the short side.

Respective output terminals 11 are arranged in two rows along the pair of long sides 10a and 10b of the drive IC 10 while the positions of the output terminals 11 arranged in one row and those in the other row are staggered with each other in the direction of the long side.

The output terminals 11 of the drive IC 10 are connected to connections 23 extending from the multiple electrodes inside a display portion 22 to the frame portion 21a of the substrate 21 via an anisotropic conductive adhesive.

Further, respective input terminals 12 of the drive IC 10 are connected to connection wirings 24 which are formed on the frame portion 21a in the direction perpendicular to the short side of the drive IC 10 by the same number as the input terminals 12 via an anisotropic conductive adhesive. Still further, one bent end 30a of a flexible printed circuit board (FPC) 30 is brought close to the short side 10c of the drive IC 10, and respective printed wirings 31 formed thereon are connected to the connection wirings 24 via an anisotropic conductive adhesive. As a result, external signals are inputted to respective input terminals 12 of the drive IC 10 through the FPC 30.

With such a structure of the liquid crystal display device 20, since the connection between respective input terminals 12 of the drive IC 10 and respective printed wirings 31 of the FPC 30 are effected at the side of the short side 10c, it is possible to secure a sufficient area on the frame portion 21a of the substrate 21 for bonding with the FPC 30, thereby obtaining a sufficient bonding strength. Further, it is not necessary to provide a space for fixing the end of the FPC to the substrate 21 outside the long side 10a of the drive IC 10.

Accordingly, the width W of the frame portion 21a can be reduced to the large margin compared with that of the prior art, and hence the substrate 21 made of glass can be downsized and thinned, so that the liquid crystal display device having the same area of the display portion 22 can be downsized and light-weighted, thereby achieving cost reduction.

Further, since the input terminals 12 and the output terminals 11 of the drive IC 10 are respectively arranged in two rows wherein the input terminals 12 in each row are arranged while the positions thereof are staggered with each other in the direction of the short side, and the output terminals 11 in each row are arranged while the positions thereof are staggered with each other in the direction of the long side, the input terminals and the output terminals can be provided by the necessary number. Further, it is possible to form the multiple connections 23 extending from respective electrode of the display portion 22 to the frame portion 21a for connecting to respective output terminals 11 while keeping mutual sufficient insulation therebetween.

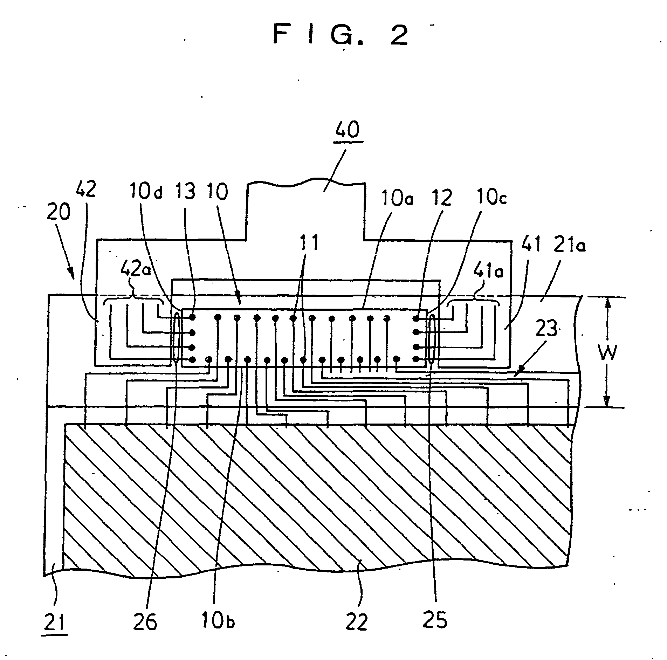

Next, a second example of a liquid crystal display device is described with reference to Fig. 2. Fig. 2 is a schematic plan view like Fig. 1 showing a part of the liquid crystal display device, and components of a drive IC 10 and a liquid crystal display device 20 corresponding to those shown in Fig. 1 are depicted by the same reference numerals as those in Fig. 1.

In the liquid crystal display device 20 according to the second example, the drive IC 10 to be mounted on a frame portion 21 a of a substrate 21 has a plurality of input terminals 12 arranged along one short side 10c and another plurality of input terminals 13 arranged along the other short side 10d.

A connection portion of an FPC 40 is bifurcated to form a first branched part 41 and a second branched part 42, and printed wirings 41 a, 42a formed respectively on the first and second branched parts 41, 42 are connected to the input terminals 12 or 13 of each row at the side of the short sides 10c, 10d via connection wirings 25, 26 formed in a pattern on the frame portion 21a of the substrate 21 and a not shown anisotropic conductive adhesive.

The arrangement of the output terminals 11 of the drive IC 10 and the connection between the output terminals 11 and the connections 23 extending from multiple electrodes inside the display portion 22 to the frame portion 21a of the drive IC 10 is the same as that in the first example shown in Fig. 1, and hence the explanation thereof is omitted.

According to the liquid crystal display device 20 of the second example, respective plural input terminals 12 and 13 of the drive IC 10 are dividedly arranged in a row along the pair of short sides 10c and 10d, and hence the multiple input terminals can be easily provided, and multiple connection wirings 25 and 26 can be easily formed on the frame portion 21a of the substrate 21 while they are insulated from each other.

The reduction of the width W of the frame portion 21a of the substrate 21 and the effect arising therefrom are the same as those of the first example.

In the first and second examples, in the case of using an anisotropic conductive film (hereinafter referred to as ACF) as an anisotropic conductive adhesive so as to mount the drive IC 10 on the substrate 21, when the drive IC 10 is mounted on the frame portion 21a of the substrate 21, the ACF is cured while it is protruded from the periphery of the drive IC 10 by about 280 µm, the FPC needs to be spaced away from the short sides 10c, 10d of the drive IC 10 about not less than 300 µm.

Examples of mounting conditions are as follows.

A transfer condition for transferring an ACF to the mounting portion of the drive IC
heating temperature: 50 to 100°C
heating time: 2 to 5 seconds
applied pressure: 20 to 100 kg/cm²

A mounting condition for post bonding the drive IC on a substrate
heating temperature: 180 to 250°C
heating time: 3 to 15 seconds
applied pressure: 200 to 600 kg/cm²

A mounting condition of the FPC using an AFC
heating temperature: 180 to 200°C
heating time: 10 to 20 seconds
applied pressure: 20 to 40 kg/cm²

The output terminals of the drive IC 10 may be arranged in 3 or more rows while the positions thereof may be staggered with each other in the direction of the long side thereof. Further, the input terminals of the drive IC 10 may be arranged in plural rows along both short sides. Alternatively, a part of the input terminals may be arranged along the long side 10b at the side of the display portion 22. In this case, it is preferable that the input terminals are input terminals for signals for which a resistance of the connection wirings for connecting to the printed wirings of the FPC may be somewhat large.

Although a plurality of drive ICs are generally mounted on one substrate for the liquid crystal display device, the arrangement of the terminals of respective drive ICs and the connection between respective terminals of respective drive ICs; respective electrodes of the display portions and the FPC may be made as those set forth in the first and second examples.

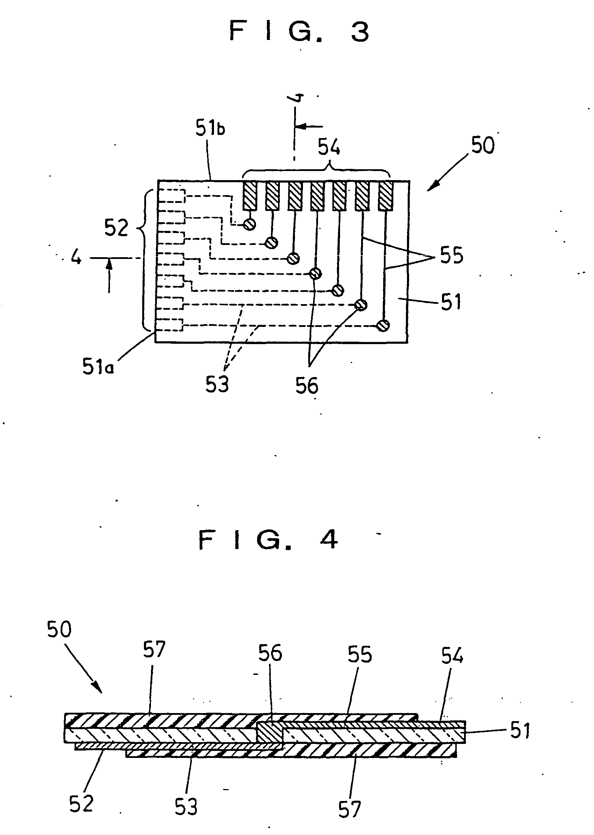

Next, an embodiment of a liquid crystal display device according to the invention is described with reference to Fig. 3 to Fig. 7.

An auxiliary substrate used in the embodiment is first described with reference to Fig. 3 and Fig. 4. Fig. 3 is a plan view of the auxiliary substrate in a state prior to being covered with a protection film, and Fig. 4 is a sectional view taken along the line 4-4 in Fig. 3 and showing a state where the auxiliary substrate is completed.

An auxiliary substrate 50 is mainly formed of glass epoxy board 51 which is rectangular in a plane shape and has a short side 51a which is substantially the same length as the short side 10c of the drive IC 10.

IC connection terminals 52 having the same number as the input terminals 12 of the drive IC 10 are arranged along the short side 51a of the glass epoxy board 51 on one face thereof (lower surface in Fig. 4), external connection terminals 54 having the same number as the IC connection terminals 52 are arranged along a long side 51b thereof on the other face thereof (upper surface in Fig. 4), and through holes 56 having the same number as IC connection terminals 52 are provided by penetrating between the one face and the other face of the auxiliary substrate substantially along a diagonal direction.

Further, metal wirings 53 for separately connecting the through holes 56 and the IC connection terminals 52 are provided on the one face of the auxiliary substrate and metal wirings 55 for separately connecting the through holes 56 and the external connection terminals 54 are provided on the other face of the auxiliary substrate.

It is preferable that these IC connection terminals 52, the external connection terminals 54, the through holes 56 and the metal wirings 53, 56 are respectively made of copper which is metal having excellent conductivity, and is plated with gold on the surface thereof. Then, a protection film 57 made of polyimide resin and the like is formed on the entire surface of both the front and back faces of the glass epoxy board 51 except on the IC connection terminals 52 and the external connection terminals 54.

According to the embodiment of the liquid crystal display device of the invention, the drive IC 10 and the auxiliary substrate 50 are mounted on the frame portion 21 a extending from the display portion 22 of the substrate 21 constituting the liquid crystal display device 20 to an outside.

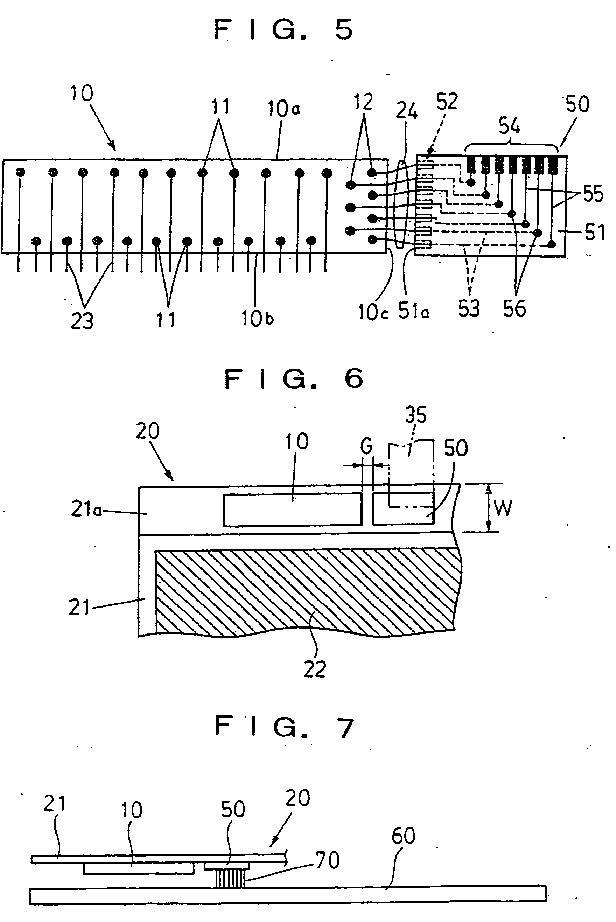

Fig. 5 shows a state of connection between the drive IC 10 and the auxiliary substrate 50. Although the input terminals 12 and the output terminals 11 of the drive IC 10 are provided on the back face of the drive IC 10 even in Fig. 5, they are represented by solid lines for the convenience of illustration. The connections 23 for connecting between respective electrodes of the display portion 22 shown in Fig. 6 and respective output terminals 11 of the drive IC 10 and the connection wirings 24 for connecting between respective input terminals 12 of the drive IC 10 and the IC connection terminals of the auxiliary substrate 50 are respectively formed of a transparent conductive film such as indium tin oxide (ITO) and the like in patterns on the frame portion 21a of the substrate 21, and the portion which overlap with the drive IC 10 has to be shown by solid lines but it was represented by broken lines for easy understanding.

In the same manner as the case of the first example, an ACF serving as an anisotropic conductive adhesive is transferred onto the mounting region of the drive IC 10 on which multiple connections 23 and the connection wirings 24 extending from respective electrodes of the display portion 22 are formed in patterns on the frame portion 21a of the substrate 21 of the liquid crystal display device 20 shown in Fig. 6.

Then, the drive IC 10 is mounted on the substrate 21 while respective input terminals 12 are aligned with respective connection wirings 24 and respective output terminals 11 are aligned with respective connections 23, then it is subjected to heating and pressurizing so that the drive IC 10 is bonded to the substrate 21 under pressure, and the input terminals 12 are separately and electrically connected to respective connection wirings 24 via the ACF while respective output terminals 11 are separately and electrically connected to respective connections 23 via the ACF.

Thereafter, the auxiliary substrate 50 is mounted on a side of the drive IC 10 such that the short side 10c of the drive IC 10 along which the input terminals 12 are arranged is close to the short side 51a of the auxiliary substrate 50 along which the IC connection terminals 52 are arranged. At this time, an interval (a gap G shown in Fig. 6) between the short side 10c of the drive IC 10 and the short side 51a of the auxiliary substrate 50 is set 300 µm or more.

Thereafter, the respective IC connection terminals 52 of the auxiliary substrate 50 and the respective connection wirings 24 on the substrate 21 are separately and electrically connected to each other by silver paste or the like, and the auxiliary substrate 50 is fixed onto the substrate 21.

As a result, the respective input terminals 12 of the drive IC 10 are separately and electrically connected to the respective IC connection terminals 52 of the auxiliary substrate 50 via the connection wirings 24, and they are also separately and electrically connected to the respective external connection terminals 54 by the metal wirings 53, 55 and the through holes 56.

Accordingly, when one end of the FPC 35 is adhered onto the auxiliary substrate 50 by an anisotropic conductive adhesive such as ACF and the like as shown by a phantom line, respective external connection terminals 54 can be separately connected to respective printed wirings of the FPC 35. Since the glass epoxy board 51 of the auxiliary substrate 50 is stronger than glass forming the substrate 21 of the liquid crystal display device 20 in junction strength by the anisotropic conductive adhesive, the junction can be surely effected even if a junction area is small. Alternatively, it is possible that respective external connection terminals 54 of the auxiliary substrate 50 and respective printed wirings of the FPC 35 are electrically connected to each other by soldering and one end of the FPC 35 is fixed to the auxiliary substrate 50. In this case, heating is effected but a pressure to be applied is reduced. Even in the third embodiment, the width W of the frame portion 21a shown in Fig. 6 can be rendered to an extent somewhat larger than a width of the drive IC 10, so that an area of the frame portion 21a can be reduced to a large margin compared with the prior art, and the same effect as those of the first and second examples can be obtained.

Further, the respective input terminals 12 of the drive IC 10 which are arranged in two rows may be arranged in one row by the auxiliary substrate 50 and the arranging direction thereof is changed by 90 degrees to be directed to align with the outer edge of the substrate 21, so that the input terminals 12 can be translocated to the external connection terminals 54 formed on an upper face of the auxiliary substrate 50 and intervals between the terminals can be increased. Although the connection wirings 24 are formed in pattern by a transparent conductive film such as ITO, the external connection terminals 54 are formed of metal terminals.

Accordingly, the connection of the FPC and the like can be effected with ease and certainty. Further, it is possible to superpose and dispose the liquid crystal display devices 20 on the circuit board of the electronic equipment and the respective external connection terminals 54 can be separately connected to the respective terminals formed on the auxiliary substrate 50 using a conductive rubber connector (zebra rubber).

Fig. 7 shows an example of this, wherein the liquid crystal display device 20 is superposed on a circuit board 60 while a face on which the drive IC 10 of the substrate 21 is mounted is opposed to the circuit board 60, a conductive rubber connector 70 (zebra rubber) is sandwiched between the auxiliary substrate 50 and the circuit board 60.

Although not shown in Fig. 7, the external connection terminals 54 shown in Fig. 5 are arranged in a row at the position of the auxiliary substrate 50 where the auxiliary substrate 50 contacts the conductive rubber connector 70 and the connection terminals of the circuit board 60 are arranged in a row at the position of the circuit board 60 where the circuit board 60 contacts the conductive rubber connector 70.

The conductive rubber connector 70 is known, wherein conductive rubber and insulating rubber are alternately laminated in the arranging direction of the terminals (laterally in Fig. 7). Both terminals which are opposed to each other sandwiching the conductive rubber connector 70 therebetween are rendered electrically conductive while insulation is kept between the adjacent terminals.

With such an arrangement, electric connection between the drive IC 10 of the liquid crystal display device 20 and the circuit board 60 of the electronic equipment can be directly effected in a short distance, thereby realizing a stable high reliable connection. Further, it is possible to effect an automatic assembly of the electronic equipment provided with a liquid crystal display device.

Although the auxiliary substrate is provided only on one short side of the drive IC, the auxiliary substrate may be provided on both short sides of the drive IC when respective input terminals are arranged in a row on both short sides of the drive IC 10 as shown in Fig. 2. In this case, respective terminals of a pair of auxiliary substrate 50 are arranged symmetrically.

### INDUSTRIAL APPICABILITY

As mentioned above, according to the invention, the liquid crystal display device can be downsized by reducing an area (frame portion) of the substrate of the liquid crystal display device on which the drive IC is mounted but not reducing the area of the display portion. Since the glass of the substrate can be downsized and thinned, thereby lowering costs.

Further, the input terminals and the output terminals can be provided by the necessary number, and multiple connections extending from respective electrodes of the display portion to the frame portion to be connected to respective output terminals of the drive IC can be easily formed while keeping the insulation between the connections.

Since the auxiliary substrate is provided, the connection with the FPC or the like for connecting between the circuit board of the electronic equipment on which the liquid crystal display device is mounted and the drive IC can be effected with ease and certainty. Still further, it becomes possible that the liquid crystal display devices is superposed and disposed on the circuit board of the electronic equipment and the drive IC is electrically connected to the circuit board via the auxiliary substrate using a conductive rubber connector (zebra rubber).

As a result, it becomes possible to effect an automatic assembly of electronic equipment provided with the liquid crystal display device.

## Claims

1. A liquid crystal display device comprising: a pair of substrates (21) including at least one transparent substrate; a liquid crystal layer sandwiched between the pair of substrates (21); a display portion (22) comprising multiple electrodes for selectively applying voltages to every pixel region of the liquid crystal layer; and
a drive IC (10) directly mounted on a portion (21 a) extending from the display portion (22) of said substrate (21) to an outside, the drive IC (10) being rectangular in a plane shape and provided with multiple output terminals (11) for outputting signals to said display portion (22) and multiple input terminals(12) for inputting signals from an outside,
wherein said multiple input terminals (12) of the drive IC (10) are arranged in a row along a short side (10c) of the drive IC (10), and said multiple output terminals (11) are arranged in a row along a long side (10a, 10b) of the drive IC (10); **characterised by**
an auxiliary substrate (50) mounted on a portion (21a) extending from said display portion (22) of the substrate (21) to an outside and being rectangular in a plane shape said auxiliary substrate (50) having a short side (51a) substantially the same length as that of said drive IC (10), said short side (51 a) of the auxiliary substrate (50) being brought close to the short side (10c) of the drive IC (10) on which said multiple input terminals (12) are arranged, wherein
multiple IC connection terminals (52) respectively connected to the multiple input terminals (12) of said drive IC (10) are arranged in a row along said short side (51a) of the auxiliary substrate (50) at one face thereof, external connection terminals (54) having the same number as the IC connection terminals (52) are arranged in a row along a long side of the auxiliary substrate (50) at the other face thereof, through holes (56) having same number as IC connection terminals (52) are provided by penetrating between said one and the other faces of the auxiliary substrate (50) substantially along a diagonal direction, metal wirings (53) for separately connecting the through holes (56) and the IC connection terminals (52) are provided on said one face of the auxiliary substrate (50), and metal wirings (55) for separately connecting the through holes (56) and said external connection terminals (54) are provided on the other face of the auxiliary substrate (50).

2. The liquid crystal display device according to Claim 1, wherein said multiple output terminals (11) are arranged in plural row along the long side (10a, 10b) of said drive IC (10) while positions of the output terminals (11) in each row are staggered with each other in a direction of the long side (10a, 10b).

3. The liquid crystal display device according to Claim 1 or 2, wherein said multiple input terminals (12) of said drive IC (10) are arranged in plural row along the short side (10c) of said drive IC (10) while positions of respective input terminals (12) in each row are staggered with each other in a direction of the short side (10c).

4. The liquid crystal display device according to any one of Claims 1 to 3, wherein said multiple input terminals (12) of said drive IC (10) are arranged along both of a pair of short sides of said drive IC (10) by plural number, and a pair of said auxiliary substrates (50) are mounted on a portion (21a) extending from said display portion (22) of said substrate (21) to the outside while short sides of both auxiliary substrates (50) are brought close to the short sides of the drive IC (10).

5. The liquid crystal display device according to any one of Claims 1 to 4, wherein said auxiliary substrate (50) comprises: a glass epoxy board (51); the respective IC connection terminals (52), the external connection terminals (54), the through holes (56) and the metal wirings (53, 55) formed on the glass epoxy board (51) and made of copper plated with gold on the surface thereof; and a protection film (57) made of polyimide and formed on an entire surface except on the respective IC connection terminals (52) and the external connection terminals (54).

## Patentansprüche

1. Flüssigkristallanzeigevorrichtung mit: einem Paar Substrate (21), das mindestens ein transparentes Substrat einschließt; einer zwischen das Paar Substrate (21) gelegten Flüssigkristallschicht; einem Anzeigebereich (22), der mehrere Elektroden zum selektiven Anlegen von Spannungen zu jedem Pixelbereich der Flüssigkristallschicht umfaßt; und
einer Antriebs-IC (10), die direkt auf einem Bereich (21a), der sich vom Anzeigebereich (22) des Substrats (21) nach außen hin erstreckt, montiert ist, wobei die Antriebs-IC (10) in der Ebene eine rechteckige Form aufweist und mit mehreren Ausgabeterminals (11) zum Ausgeben von Signalen zum Anzeigebereich (22) und mit mehreren Eingabeterminals (12) zum Eingeben von Signalen von außen ausgestattet ist,
wobei die mehreren Eingabeterminals (12) der Antriebs-IC (10) in einer Reihe entlang einer kurzen Seite (10c) der Antriebs-IC (10) angeordnet sind, und wobei die mehreren Ausgabeterminals (11) in einer Reihe entlang einer langen Seite (10a, 10b) der Antriebs-IC (10) angeordnet sind; **gekennzeichnet durch**
ein Hilfssubstrat (50), das auf einem Bereich (21a), der sich vom Anzeigebereich (22) des Substrats (21) nach außen hin erstreckt, montiert ist und welches in der Ebene eine rechtekkige Form aufweist, wobei das Hilfssubstrat (50) eine kurze Seite (51a) mit im wesentlichen derselben Länge wie derjenigen der Antriebs-IC (10) besitzt, wobei die kurze Seite (51a) des Hilfssubstrats (50) in die Nähe der kurzen Seite (10c) der Antriebs-IC (10) gebracht ist, auf der die mehreren Eingabeterminals (12) angeordnet sind, wobei
mehrere IC-Verbindungsterminals (52), die jeweils mit den mehreren Eingabeterminals (12) der Antriebs-IC (10) verbunden sind, in einer Reihe entlang der kurzen Seite (51a) des Hilfssubstrats (50) auf einer Seite davon angeordnet sind, externe Verbindungsterminals (54) mit derselben Anzahl wie die IC-Verbindungsterminals (52) in einer Reihe entlang einer langen Seite des Hilfssubstrats (50) bei der anderen Seite davon angeordnet sind, Durchgangslöcher (56) in derselben Anzahl wie IC-Verbindungsterminals (52) bereitgestellt sind, indem das Hilfssubstrat (50) im wesentlichen entlang einer Diagonalen von einer zur anderen Seite durchstoßen ist, Metallverdrahtungen (53) zum getrennten Verbinden der Durchgangslöcher (56) mit den IC-Verbindungsterminals (52) auf einer Seite des Hilfssubstrats (50) bereitgestellt sind, und Metallverdrahtungen (55) zum getrennten Verbinden der Durchgangslöcher (56) mit den externen Verbindungsterminals (54) auf der anderen Seite des Hilfssubstrats (50) bereitgestellt sind.

2. Flüssigkristallanzeigevorrichtung gemäß Anspruch 1, wobei die mehreren Ausgabeterminals (11) in mehreren Reihen entlang der langen Seite (10a, 10b) der Antriebs-IC (10) angeordnet sind, während Positionen der Ausgabeterminals (11) in jeder Reihe in einer Richtung der langen Seite (10a, 10b) gegeneinander versetzt sind.

3. Flüssigkristallanzeigevorrichtung gemäß Anspruch 1 oder 2, wobei die mehreren Eingabeterminals (12) der Antriebs-IC (10) in mehreren Reihen entlang der kurzen Seite (10c) der Antriebs-IC (10) angeordnet sind, während Positionen der jeweiligen Eingabeterminals (12) in jeder Reihe in einer Richtung der kurzen Seite (10c) gegeneinander versetzt sind.

4. Flüssigkristallanzeigevorrichtung gemäß irgendeinem der Ansprüche 1 bis 3, wobei die mehreren Eingabeterminals (12) der Antriebs-IC (10) entlang beider kurzer Seiten der Antriebs-IC (10) in mehrfacher Anzahl angeordnet sind, und wobei ein Paar der Hilfssubstrate (50) auf einem Bereich (21a), der sich vom Anzeigebereich (22) des Substrats (21) nach außen hin erstreckt, montiert sind, während kurze Seiten beider Hilfssubstrate (50) in die Nähe der kurzen Seiten der Antriebs-IC (10) gebracht sind.

5. Flüssigkristallanzeigevorrichtung gemäß irgendeinem der Ansprüche 1 bis 4, wobei das Hilfssubstrat (50) umfaßt: eine Epoxy-Glas-Platte (51); wobei die jeweiligen IC-Verbindungsterminals (52), die externen Verbindungsterminals (54), die Durchgangslöcher (56) und die Metallverdrahtungen (53, 54) auf der Epoxy-Glas-Platte (51) gebildet sind und aus Kupfer gefertigt sind, das mit Gold auf der Oberfläche davon plattiert ist; und einen Schutzfilm (57), der aus Polyimid gefestigt ist und auf einer gesamten Oberfläche mit Ausnahme der jeweiligen IC-Verbindungsterminals (52) und der externen Verbindungsterminals (54) gebildet ist.

## Revendications

1. Dispositif d'affichage à cristaux liquides comprenant : une paire de substrats (21) incluant au moins un substrat transparent ; une couche de cristaux liquides prise en sandwich entrela paire de substrats (21) ; une partie d'affichage (22) comprenant de multiples électrodes pour appliquer sélectivement des tensions à chaque région de pixel de la couche de cristaux liquides ; et
un CI d'attaque (10) monté directement sur une partie (21a) s'étendant depuis la partie d'affichage (22) dudit substrat (21) vers l'extérieur, le CI d'attaque (10) étant rectangulaire en une forme en plan et muni de multiples bornes de sortie (11) pour sortir des signaux vers ladite partie d'affichage (22) et de multiples bornes d'entrée (12) pour entrer des signaux de l'extérieur,
dans lequel lesdites multiples bornes d'entrée (12) du CI d'attaque (10) sont agencées en une rangée le long d'un côté court (10c) du CI d'attaque (10), et lesdites multiples bornes de sortie (11) sont agencées dans une rangée le long d'un côté long (10a, 10b) du CI d'attaque (10) ; **caractérisé par**
un substrat auxiliaire (50) monté sur une partie (21a) s'étendant depuis ladite partie d'affichage (22) du substrat (21) vers l'extérieur et étant rectangulaire en une forme en plan, ledit substrat auxiliaire (50) ayant un côté court (51a) sensiblement de la même longueur que celle dudit CI d'attaque (10), ledit côté court (51a) du substrat auxiliaire (50) étant amené à proximité dudit côté court (10c) du CI d'attaque (10) sur lequel lesdites multiples bornes d'entrée (12) sont agencées, dans lequel
de multiples bornes de connexion de CI (52) connectées respectivement aux multiples bornes d'entrée (12) dudit CI d'attaque (10) sont agencées en une rangée le long dudit côté court (51a) du substrat auxiliaire (50) au niveau de sa première face, des bornes de connexion externes (54) étant du même nombre que les bornes de connexion de CI (52) sont agencées dans une rangée le long d'un côté long du substrat auxiliaire (50) au niveau de son autre face, des trous traversants (56) étant du même nombre que les bornes de connexion de CI (52) sont prévus en pénétrant entre la première face et l'autre face du substrat auxiliaire (50) sensiblement le long d'une direction diagonale, des câblages métalliques (53) pour connecter séparément les trous traversants (56) et les bornes de connexion de CI (52) sont prévus sur ladite première face du substrat auxiliaire (50), et des câblages métalliques (55) pour connecter séparément les trous traversants (56) et lesdites bornes de connexion (54) sont prévus sur l'autre face du substrat auxiliaire (50).

2. Dispositif d'affichage à cristaux liquides selon la revendication 1, dans lequel lesdites multiples bornes de sortie (11) sont agencées en plusieurs rangées le long du côté long (10a, 10b) dudit CI d'attaque (10) tandis que les positions des bornes de sortie (11) dans chaque rangée sont étagées les unes par rapport aux autres dans une direction du côté long (10a, 10b).

3. Dispositif d'affichage à cristaux liquides selon la revendication 1 ou 2, dans lequel lesdites multiples bornes d'entrée (12) dudit CI d'attaque (10) sont disposées en plusieurs rangées le long du côté court (10c) dudit CI d'attaque (10) tandis que les positions des bornes d'entrée respectives (12) dans chaque rangée sont étagées les unes par rapport aux autres dans une direction du côté court (10c).

4. Dispositif d'affichage à cristaux liquides selon l'une quelconque des revendications 1 à 3, dans lequel lesdites multiples bornes d'entrée (12) dudit CI d'attaque (10) sont disposées le long à la fois d'une paire de côtés courts dudit CI d'attaque (10) par un nombre multiple, et une paire desdits substrats auxiliaires (50) sont montés sur une partie (21a) s'étendant depuis ladite partie d'affichage (22) dudit substrat (21) vers l'extérieur tandis que les côtés courts des deux substrats auxiliaires (50) sont amenés à proximité des côtés courts du CI d'attaque (10).

5. Dispositif d'affichage à cristaux liquide selon l'une quelconque des revendications 1 à 4, dans lequel ledit substrat auxiliaire (50) comprend : une carte de verre époxy (51) ; les bornes de connexion de CI respectives (52), les bornes de connexion externes (54), les trous traversants (56) et les câblages métalliques (53, 55) formés sur la carte en verre époxy (51) et constitués de cuivre plaqué d'or sur leur surface ; et un film de protection (57) constitué de polyimide et formé sur une surface entière sauf sur les bornes de connexion de CI respectives (52) et les bornes de connexion externes (54).
